# FASCICULE DE BREVET EUROPEEN

(11) **EP 4 395 978 B1**
(45) Date de publication et mention de la délivrance du brevet: **19.02.2025**
(21) Numéro de dépôt: 22773290.6
(22) Date de dépôt: 29.08.2022
(51) Int. Cl.: B29D 24/00, B32B 3/12, B32B 27/12, B32B 1/08, B32B 5/02, B32B 7/12, B32B 15/20, B32B 15/14, B64D 33/02, B64C 7/02, B64D 29/02, F02K 1/82, F02C 7/045, G10K 11/172

(54) **PROCÉDÉ DE FABRICATION D'UN PANNEAU ACOUSTIQUE A CAVITÉS OBLIQUES**
VERFAHREN ZUR HERSTELLUNG EINER AKUSTIKPLATTE MIT SCHRÄGEN HOHLRÄUMEN
METHOD FOR MANUFACTURING AN ACOUSTIC PANEL WITH OBLIQUE CAVITIES

(30) Priorité: 30.08.2021 FR 2109019
(43) Date de publication de la demande: 10.07.2024
(73) Titulaire: Safran Nacelles, 76700 Gonfreville-l'Orcher (FR)
(72) Inventeur: VERSAEVEL, Marc, 77550 MOISSY-CRAMAYEL (FR); GINI, Pierre-Yves, 77550 MOISSY-CRAMAYEL (FR); BOISTELLE, Hugo, 77550 MOISSY-CRAMAYEL (FR); DESJOYEAUX, Bertrand Léon Marie, 77550 MOISSY-CRAMAYEL (FR)
(74) Mandataire: Brevalex
(86) Numéro de dépôt international: PCT/FR2022/051623
(87) Numéro de publication internationale: WO 2023/031550

(56) Documents cités:
- EP-A1- 3 686 000
- WO-A1-2020/152418
- US-A- 4 680 216
- US-A1- 2019 039 745

## Description

### Domaine technique

L'invention se rapporte au domaine des panneaux acoustiques destinés au secteur aéronautique.

### État de la technique antérieure

Un ensemble propulsif d'aéronef conventionnel comprend des panneaux acoustiques, communément appelés « panneaux sandwiches », comprenant deux peaux et une structure intermédiaire enserrée entre celles-ci. La structure intermédiaire est généralement une structure alvéolaire en nid d'abeilles formant des cavités d'absorption acoustique, ou cavités de Helmholtz, permettant d'atténuer le bruit généré par l'ensemble propulsif. A cet effet, la peau destinée à être orientée vers la source du bruit est rendue perméable à l'air, typiquement à l'aide d'orifices traversant cette peau pour pouvoir guider l'air au sein des cavités et absorber ainsi de l'énergie acoustique.

De manière générale, l'épaisseur du panneau détermine la longueur des cavités et par conséquent leur capacité d'atténuation. En particulier, une cavité plus longue permet d'atténuer des ondes de plus grande longueur et donc des fréquences plus basses.

Pour réduire l'encombrement du panneau tout en atténuant des basses fréquences générées par l'ensemble propulsif, il est connu d'incliner les cavités de la manière décrite dans les documents US3821999, WO92/12854 and WO2020/152418.

Une telle inclinaison des cavités entraîne une réduction de la tenue en compression de la structure intermédiaire par rapport à une structure ayant des cavités dont l'axe est normal aux peaux.

Lorsque la fabrication du panneau comprend une automatisation des opérations de drapage, la pression mécanique appliquée sur la structure intermédiaire par un rouleau de drapage est typiquement de l'ordre de 0,35 MPa. Cette pression peut atteindre 1,5 MPa dans des zones présentant des singularités géométriques compte tenu de la réduction correspondante de la surface de contact entre le rouleau et les plis. Or, il est estimé que la tenue en compression d'une structure intermédiaire dont les cavités sont inclinées selon un angle de 45° et qui présente une densité comprise entre 67 kg/m³ et 104 kg/m³ est typiquement comprise entre 0,2 MPa et 0,5 MPa.

Il existe donc un risque d'écrasement de la structure intermédiaire lors de la fabrication du panneau nécessitant de réaliser une partie du drapage manuellement, ce qui augmente le coût de fabrication du panneau.

### Exposé de l'invention

L'invention vise à procurer un panneau acoustique comportant une structure intermédiaire formant des cavités obliques à un coût compétitif et sans augmenter la masse du panneau.

A cet effet, l'invention a pour objet un procédé de fabrication d'un panneau acoustique conformément à la revendication 1, comprenant :
- une étape de disposition sur un moule d'un ou plusieurs premiers plis d'un matériau comprenant une résine, de manière à former une première peau du panneau,
- une première étape de chauffage des premiers plis de manière à polymériser la résine,
- une étape de disposition sur la première peau d'un matériau adhésif,
- une étape de disposition sur le matériau adhésif d'une structure intermédiaire comprenant des cavités qui débouchent chacune d'une part sur une première surface de la structure intermédiaire et d'autre part sur une deuxième surface de la structure intermédiaire, les cavités étant obliques par rapport aux première et deuxième surfaces, de sorte que le matériau adhésif soit enserré entre la première peau et la première surface de la structure intermédiaire,
- une étape de disposition sur la deuxième surface de la structure intermédiaire d'un ou plusieurs deuxièmes plis d'un matériau comprenant une résine, de manière à former une deuxième peau du panneau,
- une troisième étape de chauffage de l'ensemble formé par la première peau, la structure intermédiaire et la deuxième peau, de manière à polymériser la résine des deuxièmes plis.

Selon l'invention, le procédé comprend, avant la disposition des deuxièmes plis, une deuxième étape de chauffage de l'ensemble formé par la première peau, le matériau adhésif et la structure intermédiaire, de manière à polymériser le matériau adhésif.

La deuxième étape de chauffage permet ainsi de fixer la structure intermédiaire sur la première peau et d'éviter son glissement par rapport à la première peau lors de la disposition des deuxièmes plis.

Il a été observé qu'une telle fixation de la structure intermédiaire sur la première augmente substantiellement la tenue en compression de la structure intermédiaire. En effet, la structure intermédiaire étant collée à la première peau sur une face, les cellules qui forment la structure intermédiaire ont beaucoup moins de latitude pour se déformer et sont donc plus rigides.

Plus spécifiquement, il a notamment été constaté que pour une structure intermédiaire présentant une densité de 67 kg/m³ et ayant des cavités inclinées de 45 degrés par rapport à la première surface de cette structure intermédiaire, la mise en oeuvre de ladite deuxième étape de chauffage permet de faire passer la tenue en compression de 0,2 MPa à 1,4 MPa.

L'invention permet ainsi d'automatiser les opérations de drapage, en particulier la disposition desdits deuxièmes plis sur la structure intermédiaire, et donc de réduire le coût de fabrication du panneau.

L'invention permet aussi d'obtenir un tel résultat sans augmenter la densité de la structure intermédiaire et donc la masse du panneau.

Il est préféré qu'un ou plusieurs desdits premiers plis et/ou un ou plusieurs desdits deuxièmes plis sont disposés à l'aide d'un robot de drapage.

Bien entendu, l'invention couvre aussi des procédés dans lesquels l'ensemble des opérations de drapage est réalisé manuellement.

Dans un mode de réalisation, les première et troisième étapes de chauffage comprennent une mise sous pression gazeuse des éléments chauffés.

Lesdits éléments chauffés comprennent en l'occurrence la première peau du panneau concernant la première étape de chauffage et, pour ce qui concerne la deuxième étape de chauffage, l'ensemble formé par la première peau, le matériau adhésif et la structure intermédiaire.

De préférence, la pression maximale appliquée lors de la troisième étape de chauffage est inférieure à la pression maximale appliquée lors de la première étape de chauffage.

A titre d'exemple, la pression maximale appliquée lors de la première étape de chauffage est comprise entre six et dix bars et la pression maximale appliquée lors de la troisième étape de chauffage est comprise entre deux et quatre bars. Préférentiellement, la seconde étape de chauffage est réalisée à une pression réduite par rapport à celle des première et troisième étapes de chauffage CH1 et CH3, typiquement entre 0,2 bars et 1,5 bars.

Dans un mode de réalisation, une ou plusieurs parmi les première, deuxième et troisième étapes de chauffage sont réalisées au sein d'un autoclave, et/ou la deuxième étape de chauffage est réalisée sous vessie dans une étuve ou un four.

De préférence, toutes ces étapes de chauffage sont réalisées dans un autoclave.

Alternativement, une ou plusieurs desdites étapes de chauffage peuvent être réalisées à l'aide d'un autre moyen de chauffage tel qu'un four ou une étuve.

Selon une première variante de réalisation, le procédé comprend une étape de perçage de la première peau réalisée après la première étape de chauffage.

Selon une deuxième variante de réalisation, le procédé comprend une étape de perçage de la deuxième peau réalisée après la troisième étape de chauffage.

Ces variantes peuvent être combinées.

De préférence, le procédé comprend une étape de perçage de la première peau réalisée après la première étape de chauffage, dans lequel une réticulation du matériau adhésif est réalisée entre cette étape de perçage et la seconde étape de chauffage.

De préférence, chacune des cavités de la structure intermédiaire s'étend le long d'un axe formant un angle compris entre 30 degrés et 60 degrés par rapport à la première surface de la structure intermédiaire.

Par exemple, cet angle peut être égal à 45 degrés.

Dans un mode de réalisation, la structure intermédiaire comprend un matériau métallique tel que l'aluminium.

Alternativement, la structure intermédiaire peut comprendre un matériau organique et/ou comprenant des fibres synthétiques comme du Nomex^{®} ou encore du thermoplastique comme du PEEK.

Dans un mode de réalisation, les premiers plis et les deuxièmes plis comprennent un matériau composite à matrice organique.

Dans un mode de réalisation, la structure intermédiaire présente une densité inférieure à 130 kg/m³, de préférence inférieure ou égale à 86 kg/m³.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une vue schématique en section longitudinale d'un ensemble propulsif d'aéronef équipé de panneaux acoustiques ;
[Fig. 2] est une vue schématique en section transversale d'un panneau acoustique conforme à l'invention, comprenant une structure intermédiaire ayant des cavités d'absorption acoustique obliques ;
[Fig. 3] est un organigramme de fabrication de panneau acoustique selon un premier mode de réalisation ;
[Fig. 4] est un organigramme de fabrication de panneau acoustique selon un deuxième mode de réalisation.

### Description détaillée de modes de réalisation

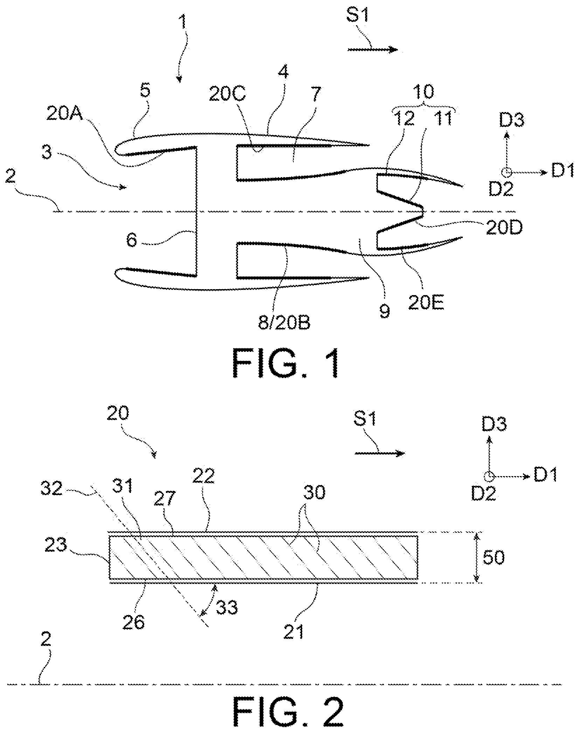

Les figures 1 et 2 comprennent un référentiel D1, D2 et D3 définissant respectivement une direction longitudinale/axiale, une direction circonférentielle/tangentielle et une direction radiale orthogonales entre elles.

Il est représenté de manière simplifiée sur la figure 1 un ensemble propulsif 1 pour aéronef comprenant une turbomachine 3 et une nacelle 4 s'étendant autour d'un axe central longitudinal 2. Dans cet exemple, la turbomachine 3 est un turboréacteur à double flux.

Par la suite, les termes « avant » et « arrière » sont considérés selon un sens S1 d'écoulement principal des gaz dans l'ensemble propulsif 1 selon l'axe 2 qui est parallèle à la direction D1.

De manière connue en soi, l'ensemble propulsif 1 comprend, de l'avant vers l'arrière, une entrée d'air 5, une soufflante 6, une veine secondaire 7 délimitée radialement vers l'intérieur par un carénage interne 8 enveloppant un générateur de gaz 9 formé par le turboréacteur 3 et radialement vers l'extérieur par des éléments de la nacelle 4, et une tuyère 10 d'éjection d'un flux primaire sortant du générateur de gaz 9. La tuyère 10 comprend un cône d'éjection 11 et une buse d'éjection 12.

L'invention se rapporte plus spécifiquement à des panneaux acoustiques 20 destinés à équiper un tel ensemble propulsif 1.

Dans cet exemple nullement limitatif, l'ensemble propulsif 1 comprend plusieurs panneaux acoustiques 20 tels que décrits ci-après, représentés en traits forts sur la figure 1. Ces panneaux 20 incluent des panneaux 20A formant une paroi interne de l'entrée d'air 5, des panneaux 20B formant une partie du carénage interne 8 et des panneaux 20C délimitant la veine secondaire 7, des panneaux 20D formant une paroi externe du cône d'éjection 11 et des panneaux 20E formant une paroi interne de la buse d'éjection 12.

Dans cet exemple, chacun des panneaux 20A à 20E s'étend circonférentiellement autour de l'axe 2 en formant un secteur d'anneau. Ainsi, notamment, chacun des panneaux 20A s'étend sur un secteur circonférentiel respectif de manière à former ensemble un anneau d'axe 2. Ce qui vient d'être décrit concernant les panneaux 20A s'applique par analogie aux panneaux 20B à 20E.

Un panneau 20 conforme à l'invention est représenté en section sur la figure 2, selon un plan de coupe parallèle aux directions D1 et D3.

Le panneau 20 comprend une première peau 21, une deuxième peau 22 et une structure intermédiaire 23.

La structure intermédiaire 23 présente une surface interne 26 et une surface externe 27 qui sont, dans la section de la figure 2, représentées planes et parallèles à la direction D1. Bien entendu, la surface interne 26 et/ou la surface externe 27 peuvent présenter une géométrie incurvée, à la fois dans la section de la figure 2 et/ou dans d'autres sections.

Dans cet exemple, la structure intermédiaire 23 s'étend selon la direction circonférentielle D2 de manière à former un secteur d'anneau.

La structure intermédiaire 23 comprend des cloisons 30 délimitant des cavités 31 qui s'étendent à la fois radialement et axialement.

Dans cet exemple, la majorité des cavités 31 débouchent d'une part sur la surface interne 26 et d'autre part sur la surface externe de la structure intermédiaire 23.

Chacune des cavités 31 s'étend le long d'un axe 32 oblique par rapport aux surfaces interne 26 et externe 27.

Dans cet exemple, l'axe 32 de chacune des cavités 31 forme avec les surfaces 26 et 27 un angle 33 d'environ 45°.

Concernant la géométrie des cavités 31, les cloisons 30 sont dans cet exemple configurées de sorte que chacune des cavités 31 présente une section de forme hexagonale, dans un plan normal à l'axe 32. Alternativement, une ou plusieurs des cavités 31 peut comprendre une section de forme triangulaire, carré ou autre. Les cavités 31 peuvent avoir toute autre forme permettant notamment d'éviter le télégraphing.

La première peau 21, aussi appelée peau interne, est disposée radialement d'un côté de la structure intermédiaire 23 de manière à recouvrir la surface interne 26 de cette structure 23. La peau interne 21 épousant la surface interne 26 de la structure intermédiaire 23, l'angle 33 précité est également formé entre l'axe 32 des cavités 31 et la peau interne 21.

La deuxième peau 22, aussi appelée peau externe, est disposée radialement de l'autre côté de la structure intermédiaire 23 de manière à recouvrir la surface externe 27 de la structure intermédiaire 23.

Dans cet exemple, la peau externe 22 est pleine tandis que la peau interne 21 comprend des ouvertures (non représentés) destinées à guider de l'air dans les cavités 31 afin d'absorber de l'énergie acoustique.

Dans cet exemple, le panneau 20 présente une épaisseur 50, ou dimension radiale, comprise entre 30 mm et 40 mm et les peaux 21 et 22 présentent chacune une épaisseur comprise entre 0,2 mm et 2 mm, par exemple 1.0 mm.

Le panneau 20 est de préférence fabriqué à l'aide d'un procédé comprenant les étapes décrites ci-après.

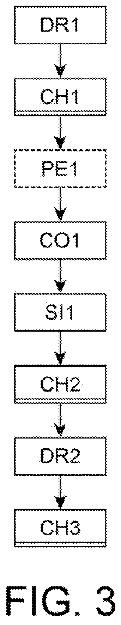

En référence à la figure 3, il est réalisé une étape de drapage DR1 dans laquelle des plis sont disposés sur un moule (non représenté) de manière à former la peau interne 21 du panneau 20.

Les plis comprennent un matériau composite à matrice organique, par exemple des fibres de carbone et sont pré-imprégnés d'une résine polymérisable, par exemple de l'époxy.

Dans une variante de réalisation, les plis comprennent chacun des rubans juxtaposés.

Dans cet exemple, les plis sont disposés sur le moule à l'aide d'un robot de drapage (non représenté) qui comprend notamment un rouleau permettant de plaquer les plis contre le moule et les uns contre les autres.

Les plis ainsi disposés sont placés avec le moule dans un autoclave (non représenté) afin de subir une première étape de chauffage CH1.

L'enceinte de l'autoclave est mise sous pression gazeuse, dans cet exemple à une pression maximale comprise entre six et dix bars, et la température est augmentée pour atteindre un palier compris entre 100°C et 250°C, et plus préférentiellement compris entre 150 et 220 °C, de manière à polymériser la résine contenue dans les plis formant la peau interne 21.

Après refroidissement et durcissement de la peau interne 21, une étape de perçage PE1 est réalisée de manière à former les ouvertures précitées.

Il est ensuite placé sur la peau interne 21 une couche d'un matériau adhésif polymérisable, par exemple de l'époxy, (étape CO1) puis la structure intermédiaire 23 (étape SI1) de sorte que le matériau adhésif soit interposé entre la peau interne 21 et la surface interne 26 de la structure intermédiaire 23. La couche d'adhésif est réticulée (par exemple par soufflage d'air chaud) avant la dépose de la structure intermédiaire 23, afin de ne pas obstruer les ouvertures acoustiques réalisées à l'étape PE1.

Dans cet exemple, la structure intermédiaire 23 comprend de l'aluminium et présente une densité d'environ 86 kg/m³.

L'ensemble formé par la peau interne 21, le matériau adhésif et la structure intermédiaire 23 est ensuite placé dans l'enceinte de l'autoclave afin de réaliser une deuxième étape de chauffage CH2.

L'enceinte de l'autoclave est mise sous pression gazeuse, dans cet exemple à une pression maximale réduite qui est dans cet exemple comprise entre 0,2 et 1,5 bars, et la température est augmentée pour atteindre un palier compris entre 150°C et 230°C, de manière à polymériser au moins partiellement la couche du matériau adhésif. Etant donné que la pression est réduite, cette étape CH2 peut alternativement être réalisée hors autoclave, par exemple sous vessie dans une étuve ou un four.

Cette deuxième étape de chauffage CH2 permet de fixer la structure intermédiaire 23 sur la peau interne 21.

Il est ensuite réalisé une deuxième étape de drapage DR2 dans laquelle des plis similaires à ceux décrits ci-dessus sont disposés sur la surface externe 27 de la structure intermédiaire 23, de manière à former la peau externe 22 du panneau 20.

Le panneau 20 est ensuite placé dans l'enceinte de l'autoclave afin de subir une troisième étape de chauffage CH3.

L'enceinte de l'autoclave est mise sous pression gazeuse, dans cet exemple à une pression maximale comprise entre deux et quatre bars, et la température est augmentée pour atteindre un palier compris entre 100°C et 250°C, et préférentiellement compris entre 150°C et 230°C, de manière à polymériser la résine des plis formant la peau externe 22.

Bien entendu, l'invention n'est pas limitée à la description qui précède et son objet est défini par les revendications 1 à 10.

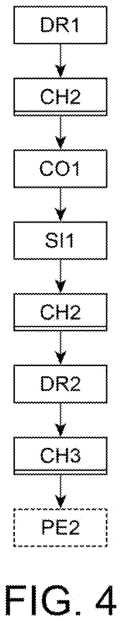

Par exemple, en référence à la figure 4, l'étape de perçage PE1 de la peau interne 21 peut être supprimée et il peut être mis en oeuvre une étape de perçage PE2 de la peau externe 22 après refroidissement et durcissement de la peau externe 22 ayant subi la troisième étape de chauffage CH3.

Par ailleurs, tout ou partie du drapage peut alternativement être réalisé manuellement et/ou les étapes de chauffage CH1, CH2 et/ou CH3 peuvent être réalisées à l'aide d'un moyen de chauffage différent d'un autoclave et/ou en mettant en oeuvre tout outillage et moyen de mise sous pression appropriés.

De plus, les plis des peaux interne 21 et/ou externe 22 peuvent également être constitués d'empilement de matériaux différents, comme par exemple des plis de fibre de verre et de carbone.

## Revendications

1. Procédé de fabrication d'un panneau acoustique (20), comprenant :
- une étape (DR1) de disposition sur un moule d'un ou plusieurs premiers plis d'un matériau comprenant une résine, de manière à former une première peau (21) du panneau (20),
- une première étape de chauffage (CH1) des premiers plis de manière à polymériser la résine,
- une étape (CO1) de disposition sur la première peau (21) d'un matériau adhésif,
- une étape (SI1) de disposition sur le matériau adhésif d'une structure intermédiaire (23) comprenant des cavités (31) qui débouchent chacune d'une part sur une première surface (26) de la structure intermédiaire (23) et d'autre part sur une deuxième surface (27) de la structure intermédiaire (23), les cavités (31) étant obliques par rapport aux première et deuxième surfaces (26, 27), de sorte que le matériau adhésif soit enserré entre la première peau (21) et la première surface (26) de la structure intermédiaire (23),
- une étape (DR2) de disposition sur la deuxième surface (27) de la structure intermédiaire (23) d'un ou plusieurs deuxièmes plis d'un matériau comprenant une résine, de manière à former une deuxième peau (22) du panneau (20),
- une troisième étape de chauffage (CH3) de l'ensemble formé par la première peau (21), la structure intermédiaire (23) et la deuxième peau (22), de manière à polymériser la résine des deuxièmes plis,
le procédé comprenant avant la disposition des deuxièmes plis, une deuxième étape de chauffage (CH2) de l'ensemble formé par la première peau (21), le matériau adhésif et la structure intermédiaire (23), de manière à polymériser le matériau adhésif.

2. Procédé selon la revendication 1, dans lequel un ou plusieurs desdits premiers plis et/ou un ou plusieurs desdits deuxièmes plis sont disposés à l'aide d'un robot de drapage.

3. Procédé selon la revendication 1 ou 2, dans lequel les première et troisième étapes de chauffage CH1 et CH3 comprennent une mise sous pression gazeuse des éléments chauffés, la pression maximale appliquée lors de la troisième étape de chauffage étant inférieure à la pression maximale appliquée lors de la première étape de chauffage.

4. Procédé selon la revendication 3, dans lequel la pression maximale appliquée lors de la première étape de chauffage CH1 est comprise entre six et dix bars et dans lequel la pression maximale appliquée lors de la troisième étape de chauffage CH3 est comprise entre deux et quatre bars, et préférentiellement, la seconde étape de chauffage CH2 est réalisée à une pression réduite par rapport à celle des première et troisième étapes de chauffage CH1 et CH3, typiquement entre 0,2 bars et 1,5 bars.

5. Procédé selon l'une quelconque des revendications 1 à 4, dans lequel une ou plusieurs parmi les première, deuxième et troisième étapes de chauffage sont réalisées au sein d'un autoclave, et/ou en ce que la deuxième étape de chauffage est réalisée sous vessie dans une étuve ou un four.

6. Procédé selon l'une quelconque des revendications 1 à 5, comprenant une étape (PE1) de perçage de la première peau réalisée après la première étape de chauffage et/ou une étape (PE2) de perçage de la deuxième peau réalisée après la troisième étape de chauffage.

7. Procédé selon l'une quelconque des revendications 1 à 5, comprenant une étape (PE1) de perçage de la première peau réalisée après la première étape de chauffage, dans lequel une réticulation du matériau adhésif est réalisée entre cette étape de perçage (PE1) et la seconde étape de chauffage (CH2).

8. Procédé selon l'une quelconque des revendications 1 à 7, dans lequel chacune des cavités (31) de la structure intermédiaire (23) s'étend le long d'un axe (32) formant un angle (33) compris entre 30 degrés et 60 degrés, par exemple égal à 45 degrés, par rapport à la première surface (26) de la structure intermédiaire (23).

9. Procédé selon l'une quelconque des revendications 1 à 8, dans lequel la structure intermédiaire (23) comprend un matériau métallique tel que l'aluminium et dans lequel les premiers plis et les deuxièmes plis comprennent un matériau composite à matrice organique.

10. Procédé selon l'une quelconque des revendications 1 à 9, dans lequel la structure intermédiaire (23) présente une densité inférieure à 130 kg/m³, de préférence inférieure ou égale à 86 kg/m³.

## Patentansprüche

1. Verfahren zum Herstellen einer Akustikplatte (20), das Folgendes umfasst:
- einen Schritt (DR1) des Anordnens einer oder mehrerer erster Schichten aus einem Material, das ein Harz umfasst, auf einer Form, um eine erste Haut (21) der Platte (20) zu bilden,
- einen ersten Schritt des Erwärmens (CH1) der ersten Schichten, um das Harz zu polymerisieren,
- einen Schritt (CO1) des Anordnens eines Klebematerials auf der ersten Haut (21),
- einen Schritt (SI1) des Anordnens einer Zwischenstruktur (23) auf dem Klebematerial, die Hohlräume (31) umfasst, die jeweils einerseits auf einer ersten Oberfläche (26) der Zwischenstruktur (23) und andererseits auf einer zweiten Oberfläche (27) der Zwischenstruktur (23) münden, wobei die Hohlräume (31) in Bezug auf die erste und die zweite Oberfläche (26, 27) schräg verlaufen, so dass das Klebematerial zwischen der ersten Haut (21) und der ersten Oberfläche (26) der Zwischenstruktur (23) eingeschlossen ist,
- einen Schritt (DR2) des Anordnens einer oder mehrerer zweiter Schichten aus einem Material, das ein Harz umfasst, auf der zweiten Oberfläche (27) der Zwischenstruktur (23), um eine zweite Haut (22) der Platte (20) zu bilden,
- einen dritten Schritt des Erwärmens (CH3) der Anordnung, die durch die erste Haut (21), die Zwischenstruktur (23) und die zweite Haut (22) gebildet wird, um das Harz der zweiten Schichten zu polymerisieren,
wobei das Verfahren vor dem Anordnen der zweiten Schichten einen zweiten Schritt des Erwärmens (CH2) der Anordnung, die durch die erste Haut (21), das Klebematerial und die Zwischenstruktur (23) gebildet wird, umfasst, um das Klebematerial zu polymerisieren.

2. Verfahren nach Anspruch 1, wobei eine oder mehrere der ersten Schichten und/oder eine oder mehrere der zweiten Schichten mit Hilfe eines Drapierroboters angeordnet werden.

3. Verfahren nach Anspruch 1 oder 2, wobei der erste und der dritte Schritt des Erwärmens CH1 und CH3 die Druckbeaufschlagung der erwärmten Elemente mit Gas umfassen, wobei der während des dritten Schritts des Erwärmens angewandte Maximaldruck niedriger ist als der während des ersten Schritts des Erwärmens angewandte Maximaldruck.

4. Verfahren nach Anspruch 3, wobei der während des ersten Schritts des Erwärmens CH1 angewandte Maximaldruck zwischen sechs und zehn Bar liegt und wobei der während des dritten Schritts des Erwärmens CH3 angewandte Maximaldruck zwischen zwei und vier Bar liegt, und wobei der zweite Schritt des Erwärmens CH2 vorzugsweise durch einen im Vergleich zu dem des ersten und des dritten Schritts des Erwärmens CH1 und CH3 reduzierten Druck durchgeführt wird, der typischerweise zwischen 0,2 Bar und 1,5 Bar liegt.

5. Verfahren nach einem der Ansprüche 1 bis 4, wobei einer oder mehrere des ersten, des zweiten und des dritten Schritts des Erwärmens in einem Autoklaven durchgeführt werden, und/oder wobei der zweite Schritt des Erwärmens unter einem Heizbalg in einem Wärmeschrank oder einem Ofen durchgeführt wird.

6. Verfahren nach einem der Ansprüche 1 bis 5, das einen Schritt (PE1) des Durchstechens der ersten Haut, der nach dem ersten Schritt des Erwärmens durchgeführt wird, und/oder einen Schritt (PE2) des Durchstechens der zweiten Haut, der nach dem dritten Schritt des Erwärmens durchgeführt wird, umfasst.

7. Verfahren nach einem der Ansprüche 1 bis 5, das einen Schritt (PE1) des Durchstechens der ersten Haut, der nach dem ersten Schritt des Erwärmens durchgeführt wird, umfasst, wobei zwischen dem Schritt des Durchstechens (PE1) und dem zweiten Schritt des Erwärmens (CH2) eine Vernetzung des Klebematerials durchgeführt wird.

8. Verfahren nach einem der Ansprüche 1 bis 7, wobei sich jeder der Hohlräume (31) der Zwischenstruktur (23) entlang einer Achse (32) erstreckt, die einen Winkel (33) zwischen 30 Grad und 60 Grad, zum Beispiel von gleich 45 Grad, in Bezug auf die erste Oberfläche (26) der Zwischenstruktur (23) bildet.

9. Verfahren nach einem der Ansprüche 1 bis 8, wobei die Zwischenstruktur (23) ein metallisches Material wie Aluminium umfasst und wobei die ersten Schichten und die zweiten Schichten ein Verbundmaterial mit einer organischen Matrix umfassen.

10. Verfahren nach einem der Ansprüche 1 bis 9, wobei die Zwischenstruktur (23) eine Dichte von weniger als 130 kg/m³, vorzugsweise von weniger oder gleich 86 kg/m³, aufweist.

## Claims

1. Method for manufacturing an acoustic panel (20), comprising:
- a step (DR1) of arranging on a mould one or more first layers of a material comprising a resin, so as to form a first skin (21) of the panel (20),
- a first step of heating (CH1) the first layers so as to polymerize the resin,
- a step (CO1) of arranging on the first skin (21) an adhesive material,
- a step (SI1) of arranging on the adhesive material an intermediate structure (23) comprising cavities (31) which each open out on the one hand on a first surface (26) of the intermediate structure (23) and on the other hand on a second surface (27) of the intermediate structure (23), the cavities (31) being oblique with respect to the first and second surfaces (26, 27), such that the adhesive material is enclosed between the first skin (21) and the first surface (26) of the intermediate structure (23),
- a step (DR2) of arranging on the second surface (27) of the intermediate structure (23) one or more second layers of a material comprising a resin, so as to form a second skin (22) of the panel (20),
- a third step of heating (CH3) the assembly formed by the first skin (21), the intermediate structure (23) and the second skin (22), so as to polymerize the resin of the second layers,
the method comprising, before arranging the second layers, a second step of heating (CH2) the assembly formed by the first skin (21), the adhesive material and the intermediate structure (23), so as to polymerize the adhesive material.

2. Method according to Claim 1, wherein one or more of said first layers and/or one or more of said second layers are arranged by means of a draping robot.

3. Method according to Claim 1 or 2, wherein the first and third heating steps CH1 and CH3 comprise pressurizing the heated elements with gas, the maximum pressure applied during the third heating step being lower than the maximum pressure applied during the first heating step.

4. Method according to Claim 3, wherein the maximum pressure applied during the first heating step CH1 is comprised between six and ten bar and wherein the maximum pressure applied during the third heating step CH3 is comprised between two and four bar, and preferably, the second heating step CH2 is carried out at a reduced pressure relative to that of the first and third heating steps CH1 and CH3, typically between 0.2 bar and 1.5 bar.

5. Method according to any one of Claims 1 to 4, wherein one or more among the first, second and third heating steps are carried out within an autoclave, and/or in that the second heating step is carried out under a bladder in an oven or a furnace.

6. Method according to any one of Claims 1 to 5, comprising a step (PE1) of piercing the first skin carried out after the first heating step and/or a step (PE2) of piercing the second skin carried out after the third heating step.

7. Method according to any one of Claims 1 to 5, comprising a step (PE1) of piercing the first skin carried out after the first heating step, wherein cross-linking of the adhesive material is carried out between this piercing step (PE1) and the second heating step (CH2).

8. Method according to any one of Claims 1 to 7, wherein each of the cavities (31) of the intermediate structure (23) extends along an axis (32) forming an angle (33) comprised between 30 degrees and 60 degrees, for example equal to 45 degrees, relative to the first surface (26) of the intermediate structure (23).

9. Method according to any one of Claims 1 to 8, wherein the intermediate structure (23) comprises a metallic material such as aluminium and wherein the first layers and the second layers comprise an organic matrix composite.

10. Method according to any one of Claims 1 to 9, wherein the intermediate structure (23) has a density of less than 130 kg/m³, preferably less than or equal to 86 kg/m³.
